# EUROPÄISCHE PATENTSCHRIFT

(11) **EP 2 577 284 B1**
(45) Veröffentlichungstag und Bekanntmachung des Hinweises auf die Patenterteilung: **02.10.2019**
(21) Anmeldenummer: 11721243.1
(22) Anmeldetag: 24.05.2011
(51) Int. Cl.: G01N 30/06, G01N 30/18, B01D 15/12, B01D 15/14, G01N 33/00, G01N 35/10

(54) **VORRICHTUNG ZUR DURCHFÜHRUNG EINER PROBENVORBEREITUNG**
APPARATUS FOR PREPARING A SAMPLE
APPAREIL POUR PREPARER UN ECHANTILLON

(30) Priorität: 29.05.2010 DE 102010022016
(43) Veröffentlichungstag der Anmeldung: 10.04.2013
(73) Patentinhaber: Gerstel Systemtechnik GmbH & Co. KG, 45473 Mülheim (DE)
(72) Erfinder: SANDRA, Patrick, B-8510 Marke (BE); TIENPONT, Bart, B-8550 Zwevegem (BE); DAVID, Frank, B-8310 Brügge (BE); SANDRA, Tom, B-8510 Bellegem (BE); SANDRA, Koen, B-8510 Bellegem (BE)
(74) Vertreter: Henseler, Daniela
(86) Internationale Anmeldenummer: PCT/EP2011/002562
(87) Internationale Veröffentlichungsnummer: WO 2011/151026

(56) Entgegenhaltungen:
- EP-A1- 0 123 858
- EP-A1- 1 798 551
- DE-U- 1 846 022
- US-A- 3 179 499
- US-A- 5 782 964

## Beschreibung

Die Erfindung betrifft eine Vorrichtung zur Durchführung einer Probenvorbereitung für ein Analysegerät nach dem Oberbegriff des Anspruchs 1.

Aus EP 1 798 551 A1 ist eine Vorrichtung zur Probenvorbereitung bei chromatographischen Trennmethoden nach dem Oberbegriff des Anspruchs 1 bekannt.

Die chromatographischen Trennmethoden zählen zu den wichtigsten Analysemethoden bei der qualitativen und quantitativen Bestimmung von Probeninhaltsstoffen. Die Effizienz der Trenntechniken lässt sich in der Regel durch eine geeignete Probenvorbereitung steigern. Zur Höchstleistung in Präzision, Wiederholbarkeit und Probendurchsatz gelangt der Anwender indes nur, wenn es ihm gelingt, möglichst viele Probenvorbereitungsschritte zu automatisieren.

Aus DE-OS 1 773 141 ist ein Verfahren zur Probengabe bei Gasanalysegeräten, insbesondere bei Gaschromatographen, bekannt, bei dem ein Probengefäß teilweise mit einer flüssigen oder festen Untersuchungssubstanz gefüllt und danach mit einer selbstdichtenden Membran versehen wird. Durch Einstellung der Temperatur des Probengefäßes wird erreicht, dass die flüchtigen Komponenten sich in dem freien Innenraum des Probengefäßes anreichern. Um Proben aus diesem Gasraum zu entnehmen, wird durch die Membran eine Probenentnahmevorrichtung hindurchgestochen. Die bei dieser so genannten Headspace-Methode entnommenen flüchtigen Bestandteile werden dann gasanalytisch untersucht.

Zur automatischen Durchführung des Verfahrens werden verschiedene Probengefäße in einer Reihe auf einer Transportvorrichtung aufgestellt, die Stationen besitzt, an denen die Probengefäße einer Behandlung unterzogen werden. Hierzu zählt die Auslösung einer chemischen Reaktion wenigstens einer Probenkomponente und der Transport der Probengefäße nach einer gewissen Strecke unter einer Entnahmevorrichtung.

Im Falle der Pyrolyse wird die Untersuchungssubstanz in Metallschiffchen gefüllt, und diese Schiffchen werden in die Probengefäße gestellt. Die Schiffchen können dann wieder an bestimmten Stellen der Transportvorrichtung beispielsweise induktiv geheizt werden. Untersucht werden in diesem Falle die meist flüchtigen Pyrolyseprodukte.

Zur Aufbereitung fester Proben mit Hilfe pyrolytischer Zersetzung für eine Analyse mittels eines Gaschromatographen ist allgemein bekannt, Untersuchungssubstanzen unmittelbar im Gaschromatographen(GC)-Eingang unter Luftausschluss zu zersetzen. Die Pyrolyseprodukte werden der gängigen Praxis folgend auf die GC-Säule geleitet, aufgetrennt und vermessen.

Wie aus DE 42 06 109 C2 bekannt ist, wird die pyrolytische Zersetzung von chemischen Substanzen in der analytischen Chemie beispielsweise auch angewandt, um aus festen, hochmolekularen Stoffen niedermolekulare Produkte zu gewinnen, die durch chromatographische Trennmethoden separiert und identifiziert werden können. Dazu werden die zu untersuchenden Substanzen in Metallschiffchen in ein Reaktorgehäuse eingeführt. Die Metallschiffchen werden erhitzt zur Einstellung einer Pyrolysetemperatur. Das Reaktorgefäß wird von einem Trägergasstrom durchspült, der die Pyrolyseprodukte in eine analytische Messvorrichtung führt.

Der thermische Abbau (Pyrolyse, Thermolyse) von halbfesten und festen Proben vor der chemischen Analyse der resultierenden Abbauprodukte ist heutzutage ein umfangreich verwendetes Probenvorbereitungsverfahren für die Identifikation oder Charakterisierung von festen oder halbfesten Proben. Im analytischen Maßstab wird eine Probe, typischerweise im Bereich von µg bis mg, in einen kleinen Behälter eingebracht oder direkt mit einem Heizmedium in Kontakt gebracht. Die Probe wird während einer sehr kurzen Zeit auf eine Temperatur erhitzt, die eine thermo-chemische Reaktion der Probe ermöglicht.

Die Pyrolyse wird im Allgemeinen bei Temperaturen zwischen 500°C und 1400°C durchgeführt. Die Produkte des thermischen Abbaus (Pyrolysat) werden dann bevorzugt durch chromatographische Trennverfahren, überwiegend Gaschromatographie, analysiert. In anderen Fällen wird das Pyrolysat direkt in einen Detektor, meist ein Massenspektrometer, für eine allgemeine Charakterisierung der Pyrolysatzusammensetzung gegeben. Die typischerweise durch Pyrolyse analysierten Proben sind heutzutage biologische Proben und Umweltproben, oder in künstlerischen Materialien, in Nahrungsmittel- und Landwirtschaftsanwendungen, in der Geochemie und Kraftstoffquellen, in der Forensik und synthetischen Polymeren zu finden. Ferner stehen verschiedene chemische Reagensprodukte zur Verfügung für die in-situ-Derivatisierung von polaren Pyrolysatverbindungen. Polare Verbindungen, die bei der Gaschromatographie schlechte Peakformen ergeben, sind folglich durch eine Modifikation der Pyrolysatverbindungsstruktur detektierbar. Wesentlich für die analytische Pyrolyse ist, dass die Pyrolysetemperatur so schnell wie möglich erhalten wird und dass die Temperatur während einer benutzerdefinierten Zeit aufrechterhalten wird. DE 198 17 016 A1 zeigt ein Probenaufnahmerohr mit einer Probe, die in eine Heizschlange einsteckbar ist. DE 197 20 687 C1 zeigt ein Pyrolyseröhrchen in einer Induktionsspule. DE 1 846 022 U zeigt eine Pyrolysezelle umgeben von einer Platindraht-Spirale. DE 1 598 436 A zeigt einen Heizwiderstand in einem Pyrolysenraum.

Aufgabe der Erfindung ist es daher, eine Vorrichtung zur Durchführung einer Probenvorbereitung zu schaffen, die die automatisierte Handhabung der Proben mit thermochemischer Aufbereitung derselben zur analytischen Untersuchung der thermischen Abbauprodukte verbessert und die Reproduzierbarkeit der Probenvorbereitung optimiert.

Diese Aufgabe wird durch die Merkmale des Anspruchs 1 gelöst.

Hierdurch wird eine Vorrichtung zur Durchführung einer Probenvorbereitung geschaffen, die eine vorteilhafte thermische Behandlung der jeweils zu untersuchenden Probe erlaubt. Das erfindungsgemäße Probengefäß bildet einen Reaktionsraum, der eine schnelle Aufheizung der Probe erlaubt.

In das Probengefäß können ferner Flüssigkeitsmengen eingegeben werden, um chemische Reaktionen vor und/oder nach der thermischen Behandlung der Probe durchführen zu können. Das Probengefäß ist folglich vorzugsweise gleichzeitig auch eine Art Reagenzglas. In dem Probengefäß können die umgewandelten bzw. abgebauten Produkte/Verbindungen nach der thermischen Behandlung gelöst werden.

Wesentlich für die Reproduzierbarkeit und die Automatisierbarkeit ist, dass der Thermoprozess und gegebenenfalls ein Auflösungsprozess mit oder ohne chemische Reaktion vor und/oder nach dem Thermoprozess in dem Probengefäß stattfinden können. Das Einspritzsystem des Chromatographiesystems oder Detektionsystems sowie die Trennsäule werden im Thermoprozess nicht kontaminiert, da die Entnahme für den Einspritzprozess aus dem Probengefäß erfolgt. Die thermo-chemische Reaktion in dem Probengefäß wird unabhängig vom Analyseprozess ausgeführt. Keine direkte Kopplung wird mit einem Chromatographiesystem hergestellt.

Eine Probe kann genommen und unmittelbar im Probengefäß aufbewahrt und für eine thermo-chemische Reaktion, insbesondere eine Pyrolyse, beispielsweise ohne Änderung ihres Charakters zu einem Labor gesandt werden. Mikroorganismen wie Bakterien und Pilze können daher gebrütet oder geerntet und direkt in ein (sterilisiertes) Fläschchen gegeben werden. Ebenfalls können die thermo-chemisch umgewandelten oder pyrolytisch abgebauten Produkte gelagert werden. Das geschlossene System begrenzt das Risiko von Verunreinigungen.

Vorzugsweise wird eine dezentrale Schnittstelle auf Basis eines Fläschchens geschaffen. Diese Schnittstelle umfasst besonders bevorzugt eine Fläschchenanordnung mit einem Modulfläschchen, das mit einem integrierten Heizelement ausgebildet ist. In das Modulfläschchen ist ein Einsatzfläschchen als Probengefäß eingesetzt. Verschließbar ist das Modulfläschchen durch eine Kappe mit Septum (auch Injektionsstopfen). Dieses Septum deckt vorzugsweise gleichzeitig auch das Einsatzfläschchen ab. Proben werden in das Einsatzfläschchen gegeben und dieses wird dann auf eine Temperatur erhitzt, die eine thermo-chemische Reaktion, insbesondere einen thermischen Abbau (Pyrolyse, Thermolyse), der Probe ermöglicht. Durch das Septum sind Gase und/oder Flüssigkeiten in das Einsatzfläschchen als Probengefäß einspritzbar. Das Modulfläschchen ist folglich vorzugsweise ein Injektionsfläschchen (auch Vial) mit einem Innenbehältnis als Probengefäß.

Die Abmessungen eines Modulfläschchens können so gewählt werden, dass diese durch die meisten kommerziell erhältlichen Roboter und automatischen Probennahmevorrichtungen einer Chromatographieausrüstung transportiert und gehandhabt werden können.

Das Probengefäß kann vor der thermischen Behandlung mit einem Inert- oder reaktiven Gas gespült werden. Nach der thermischen Behandlung der Probe kann zugelassen werden, dass sich das Probengefäß abkühlt.

Ferner kann eine kleine Menge an Lösungsmittel in das Probengefäß gegossen werden, um die Produkte des thermischen Abbaus aufzulösen. Diese Lösung kann dann einer chemischen Analyse, insbesondere durch Gaschromatographie (GC), Hochleistungs-Flüssigkeitschromatographie (HPLC), superkritischer Fluidchromatographie (SFC) oder Kapillarelektrophorese (CE), unterzogen werden.

Weitere Ausgestaltungen und Vorteile der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1A und 1B zeigen schematisch Schnitte eines Probengefäßes mit einer Halterung gemäß einem Beispiel, das nicht Teil der vorliegenden Erfindung ist,
Fig. 2A und 2B zeigen schematisch Schnitte eines Probengefäßes mit einer Halterung gemäß einem Beispiel, das nicht Teil der vorliegenden Erfindung ist,
Fig. 3 zeigt schematisch einen Schnitt eines Modulfläschchens mit einem Einsatzfläschchen als Probengefäß,
Fig. 4A und Fig. 4B zeigen schematisch das Modulfläschchen mit dem Einsatzfläschchen als Probengefäß gemäß Fig. 1 in einer perspektivischen Explosionsdarstellung und im Längsschnitt derselben,
Fig. 5 zeigt schematisch eine Modulfläschchenstation,
Fig. 6 zeigt schematisch eine automatisierte Probenvorbereitungsstation.

Die Erfindung betrifft eine Vorrichtung zur Durchführung einer Probenvorbereitung gemäß Anspruch 1.

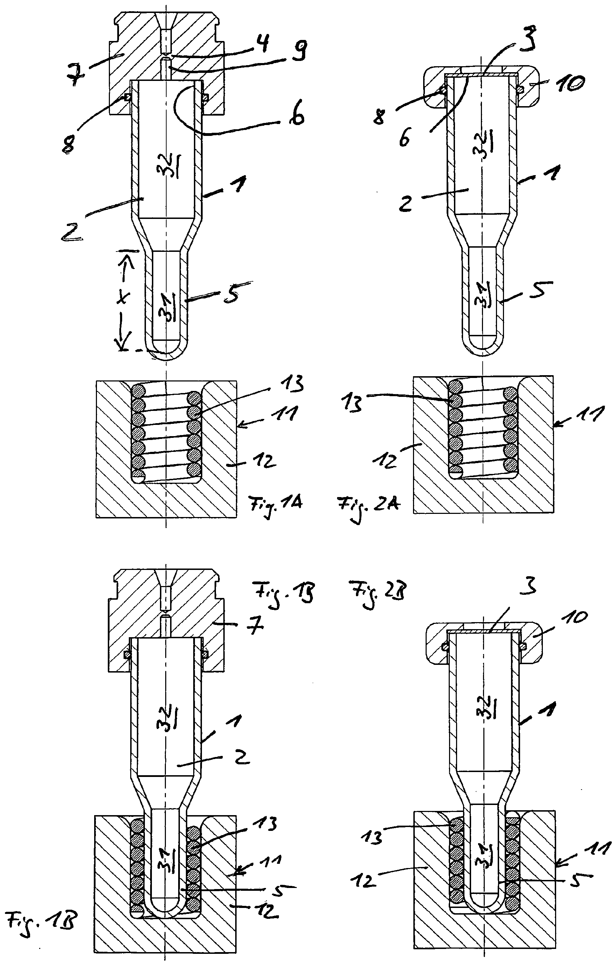

Wie in Fig. 1A, Fig. 1B, Fig. 2A, Fig. 2B dargestellt, wird bei dem erfindungsgemäßen Verfahren zur Probenvorbereitung ein Probengefäß 1 verwendet. Dieses Probengefäß 1 bildet eine Kavität, in die Untersuchungssubstanz als eine Seele eingefüllt wird. Das Probengefäß 1 ist vorzugsweise ein Hohlgefäß, insbesondere ein röhrchenförmiges Behältnis, zur Aufnahme von Untersuchungssubstanz. Die Untersuchungssubstanz wird in dem Probengefäß 1 einer thermo-chemischen Reaktion unterworfen. Das Probengefäß 1 wird über seine einseitige Öffnung nur teilweise mit der Untersuchungssubstanz bzw. Probe gefüllt und verschlossen. Die Probe besteht vorzugsweise aus festen, halbfesten oder eingedampften Produkten. Das Verschließen des Probengefäßes 1 erfolgt vorzugsweise mit einem Septum 3 oder einer selbstdichtenden Trennwand 4.

Länge und Weite des Probengefäßes 1 sind derart gewählt, dass durch die eingebrachte Probe, deren Menge im analytischen Maßstab üblicherweise im Bereich von µg bis mg liegt, maximal eine Teillänge X eines Innenraums 2 des Probengefäßes 1 bzw. dessen Kavität mit der Probe gefüllt wird. Der Innenraum 2 des Probengefäßes 1 bildet insoweit ein Probenfach 31. Oberhalb dieser Teillänge X bildet der Innenraum 2 des Probengefäßes 1 ein Kopfraumfach bzw. ein Innenraumfach 32, das beispielsweise einen freien Innenraumabschnitt bilden kann. In dem Kopfraumfach 32 können sich flüchtige Bestandteile anreichern oder Gase eingespült werden, so dass das Kopfraumfach 32 dann einen Gasraum bzw. ein Gasfach bildet. Alternativ oder zusätzlich kann in das Kopfraumfach 32 ein Lösungsmittel und/oder ein Reagens eingefüllt werden, und zwar vor und/oder nach der thermo-chemischen Reaktion der Probe. Das Kopfraumfach 32 kann dann als ein Lösungsmittelfach verwendet werden.

Die Weite des Probengefäßes 1 im Bereich des Probenfaches 31 liegt vorzugsweise in einem Bereich von 1 bis 20 mm. Die Probe kann das Probengefäß 1 mit einer Füllhöhe füllen. Die Untersuchungssubstanz kann dann in dem Probengefäß 1, insbesondere dem Probenfach 31, beispielsweise säulenartig bzw. siloartig aufgehäuft sein. Die Probe kann alternativ auch als Flüssigkeit, einstückiger Festkörper oder Agglomerat in das Probengefäß 1 eingefüllt werden. Oberhalb der Füllmenge bzw. Füllgegenstand erstreckt sich ein Freiraumbereich des Kopfraumfachs 32, der mit einem Gas oder einer Flüssigkeit befüllbar ist.

Die Untersuchungssubstanz bzw. Probe wird in dem Probengefäß 1 einer thermo-chemischen Reaktion unterworfen, bei der mindestens eine Probenkomponente in eine andere Substanz umgewandelt wird. Vorzugsweise handelt es sich hierbei um eine Thermolyse oder eine Pyrolyse. Das Probengefäß 1 ist somit ein Reaktionsgefäß zur Probenvorbereitung.

Die Produkte der thermischen Umwandlung bzw. des thermischen Abbaus werden mit einer Entnahmevorrichtung (nicht dargestellt) aus dem Probengefäß 1 zur analytischen Untersuchung entnommen. Das Probengefäß 1 ist somit ein Reaktionsgefäß zur Probennahme.

Das Probengefäß 1 weist vorzugsweise als Kavität einen Schaft oder eine Gefäßverengung 5 auf, in den oder in die die Untersuchungssubstanz bzw. Probe gegeben wird, um dort der thermo-chemischen Reaktion unterworfen zu werden. Der Schaft (bzw. die Gefäßverengung) 5, der mit der Untersuchungssubstanz zumindest teilweise gefüllt wird, bildet das Probenfach 31 und erstreckt sich folglich vorzugsweise entlang der Teillänge X. Der Schaft 5 bildet vorzugsweise einen unteren Teil des Probengefäßes 1. Das Probengefäß 1 ist dann vorzugsweise fläschchenförmig mit einer wählbaren Nennweite und einem engeren Querschnitt im Bereich des Schaftes 5. Der Schaft 5 bildet quasi einen Fläschchenhals eines auf dem Kopf stehend angeordneten Fläschchens, das einseitig offen ist an einer Fläschchenöffnung 6.

Das Probengefäß 1 ist an einem dem Schaft 5 gegenüberliegenden Ende mit einem einseitig offenen Ende, hier vorzugsweise der Fläschchenöffnung 6, ausgebildet, das durch das Septum 3 oder die selbstdichtende Trennwand 4 verschlossen wird.

Wie Fig. 1A zeigt, ist die selbstdichtende Trennwand 4 vorzugsweise in einem auf das offene Ende aufsetzbaren Transportkopf 7 ausgebildet. Das Probengefäß 1 ist mit seinem offenen Ende abgedichtet in den Transportkopf 7 einsetzbar, wozu beispielsweise ein O-Ring 8 verwendet werden kann. Die selbstdichtende Trennwand 4 verschließt einen Auslasskanal 9, der in das Probengefäß 1 mündet.

Alternativ kann, wie Fig. 2A zeigt, auf das offene Ende des Probengefäßes 1 ein Deckel 10 aufsetzbar sein. Der Deckel 10 sitzt abgedichtet auf dem Probengefäß 1, wozu wiederum ein O-Ring 8 vorgesehen sein kann. Der Deckel 10 weist eine kreisförmige Ausnehmung auf, um das Septum 3 für das Durchstechen mit einer Entnahmevorrichtung (nicht dargestellt) freizugeben.

Wie Fig. 1B und Fig. 2B zeigen, ist zur thermischen Behandlung der Probe in dem Probengefäß 1 das Probengefäß 1 in eine Heizvorrichtung 11 einsetzbar. Thermisch beaufschlagt wird das Probengefäß 1 nur entlang einer Teillänge des Probengefäßes 1, die vorzugsweise der Teillänge X entspricht. Die Heizvorrichtung 11 ist vorzugsweise als eine Halterung 12 mit einem integrierten Heizelement, das vorzugsweise in Form einer Heizdrahtspule bzw. Heizwendel 13 ausgebildet ist, in die das Probengefäß 1 teilweise einsetzbar ist, ausgestaltet. Die Heizdrahtspule 13 umgibt das Probengefäß 1 für eine indirekte Wärmeübertragung nur entlang eines Teilabschnitts, der mit der Probe gefüllt ist. Aufgrund der Standhöhe der Probe in dem Probengefäß 1 wird eine Heizstrecke gebildet, entlang der die Probe in dem Probengefäß 1 thermisch beaufschlagt wird. Eine intensive, die Probe durchdringende Wärmeübertragung wird dadurch erreicht, wobei aber nur ein Teilabschnitt des Probengefäßes 1, insbesondere der Kavität, hohen Temperaturen ausgesetzt wird.

Bevorzugt ist, dass neben insbesondere der Wärmestrahlung das Probengefäß 1 über seine Gefäßwandung durch Wärmeleitung, d.h. Berührung mit der Probe, Wärme auf die Probe überträgt.

Die Heizdrahtspule 13 kann vor einem Einsetzen des Probengefäßes vorgeheizt sein, um beispielsweise eine Flash-Pyrolyse durchzuführen. Die Heizdrahtspule 13 kann auch bei unterschiedlichen Temperaturen betrieben werden, um beispielsweise eine flüssige Probe vor einer Pyrolyse in dem Probengefäß 1 einzudampfen.

Die Probe, die vorzugsweise in die Kavität in Form des Schaftes 5 gefüllt ist, wird also einer Temperaturbehandlung ausgesetzt, die umfänglich des Schaftes 5 angelegt wird. Die Temperaturbehandlung wird auf das untere Probenfach 31 beschränkt, während im bzw. am Kopfraumfach 32 durch ein Auslegen der Länge und des Querschnitts des Probengefäßes 1 entlang des Kopfraumfaches 32 ein Temperaturabfall eingestellt wird. Bei einer Temperaturhöhe der Temperatureinwirkung von bis zu 1400°C wird ein Temperaturabfall (z.B. in der Gefäßwandung des Probengefäßes 1), vorzugsweise auf mindestens 300°C, bis hin zur Fläschchenöffnung 6 des Probengefäßes 1 eingestellt.

Das Probengefäß 1 und die Heizvorrichtung 11 bilden eine Vorrichtung zur Vorbereitung von Proben für ein Analysegerät der chromatographischen Trenntechnik. Als thermo-chemische Reaktion wird vorzugsweise eine pyrolytische Zersetzung durchgeführt. Der thermische Abbau kann in einer inerten Atmosphäre durchgeführt werden, d.h. ein Inertgas (Helium, Stickstoff) wird in das Probengefäß 1 eingeführt. Alternativ kann der thermische Abbau in Gegenwart einer Sauerstoff- oder Luftatmosphäre ausgeführt werden. Eine solche oxidative Pyrolyse ergibt einen größeren Anteil an oxidierten Pyrolysatverbindungen.

Die Probe und anschließend die thermischen Abbauprodukte können durch in das Probengefäß 1 eingespritzte Reagenzien mit oder ohne chemische Reaktion aufgelöst werden. Das Probengefäß 1 wird folglich auch zur Aufnahme von Flüssigkeiten für chemische Reaktionen eingesetzt. Das Probengefäß 1 ist somit auch ein Reagenzglas für chemische Reaktionen, Untersuchungen und zur Aufbewahrung der Probe, und zwar vor und/oder nach deren thermo-chemischen Behandlung.

Für eine chromatographische Trennung kann aus dem Dampfraum über der aufbereiteten Probe eine Gasphase direkt entnommen werden oder die aufbereitete Probe in einer wählbaren mobilen Phase gelöst werden. Bei der mobilen Phase kann es sich dabei um eine Flüssigkeit oder ein überkritisches Fluid handeln.

Die Kavität des Probengefäßes 1 wird im analytischen Maßstab gefüllt. Das Probengefäß 1 ist insoweit mindestens entlang eines Abschnitts der Teillänge X vorzugsweise (aufgefüllt, d.h. die Probe ist randseitig begrenzt durch die Wandung des Probengefäßes 1. Es wird dann ein quasi Füllstand in dem Probengefäß 1 erreicht, wodurch eine verbesserte Wärmeübertragung von der Heizvorrichtung 11 erreicht wird. Gegebenenfalls kann durch ein Stopfen eine gleichmäßigere Ausfüllung erreicht werden.

Eine Heizstrecke der Heizvorrichtung 11 für eine indirekte Wärmeübertragung wird entlang der Füllmenge angelegt. Die Form des Probengefäßes 1 ist dazu neben röhrchenfömig oder fingerartig auch mit einer Gefäßverengung bzw. Schaft 5, insbesondere fläschchenförmig, ausbildbar. Das Probengefäß 1 ist vorzugsweise an seinem unteren Ende ein verjüngtes Behältnis. Stets ist das Probengefäß 1 aber vorzugsweise ein einseitig offenes, durch eine Abdeckung (z.B. Injektionsstopfen, PTFE-Septum, selbstdichtende Trennwand usw.) verschließbares Hohlgefäß. Die Heizstrecke wird beschränkt auf den Ort, wo die Probe eingefüllt ist. Die Art, wie die Probe im Probengefäß 1 ansteht, ermöglicht eine hohe thermische Durchdringung derselben.

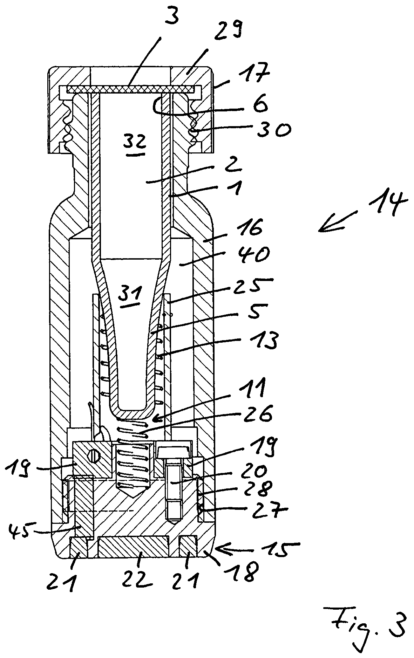

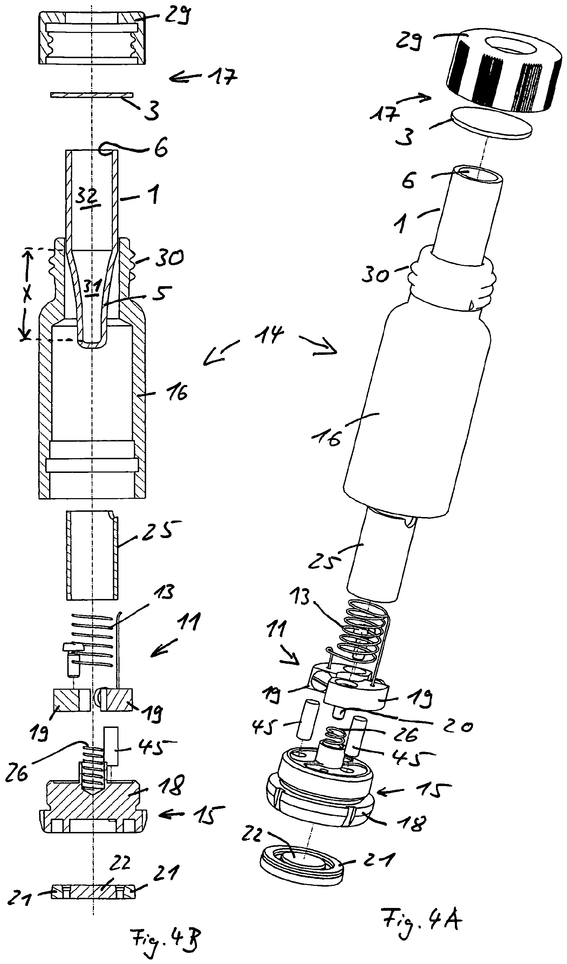

Gemäß einem weiteren, in den Fig. 3 und Fig. 4 dargestellten Ausführungsbeispiel ist das Probengefäß 1 ein Teil einer Fläschchenanordnung, die eine dezentrale Schnittstelle der analytischen Probenvorbereitung bildet. Als Halterung ist ein mit einer Verschlusskappe 17 verschließbares Modulfläschchen 14 vorgesehen, in dessen Innenraum 40 das Probengefäß 1 als ein Einsatzfläschchen eingesetzt ist und dessen unteres Teil 15 die Heizdrahtspule 13 in das Modulfläschchen 14 integriert.

Die Fläschchenanordnung umfasst also ein beheizbares Modulfläschchen 14 mit integrierter Heizvorrichtung 11, in das das Probengefäß 1 als ein Einsatzfläschchen lösbar eingesetzt ist. Verschlossen wird die Fläschchenanordnung durch eine Injektionsabdeckung.

Eine in das Probengefäß 1 eingefüllte feste oder halbfeste Probe als auch eine in dem Probengefäß 1 eingedampfte Flüssigkeit kann auf eine wählbare Temperatur aufgeheizt werden, um beispielsweise eine Pyrolyse durchzuführen. Die vorstehenden Ausführungen zur Ausbildung des Probengefäßes 1 gelten hier entsprechend. In Abwandlung vom ersten Ausführungsbeispiel ist das Probengefäß 1 hier allerdings ein Innengefäß, das in ein Modulfläschchen 14 als Außengefäß lösbar eingesetzt wird.

Das Modulfläschchen 14 ist nach Art eines Vials dimensioniert und umfasst einen Modulfläschchenkörper 16, an den ein unterer Teil 15 und eine obere (Injektions)Kappe 17, jeweils vorzugsweise lösbar, befestigt sind. In einem Aufnahmeraum 40 des Modulfläschchens 14 ist das Probengefäß 1 als Innengefäß vorgesehen. Der untere Teil 15 und die Kappe 17 sind vorzugsweise an den Modulfläschchenkörper 16 ein- oder aufschraubbar.

Der untere Teil 15 enthält bodenseitig des Modulfläschchens 14 die Heizvorrichtung 11, die an einem halterungsartig ausgebildeten elektrischen Isolationsbasisteil 18 angeordnet ist. Dazu sind an dem elektrischen Isolationsbasisteil 18 zwei Metallstücke 19 als Heizdrahtkontakte mit Schrauben 20 befestigt. Zwei Metallringelektroden 21, 22 sind im Isolationsbasisteil 18 angebracht, und elektrische Kontakte zwischen den Metallstücken 19 und den Ringelektroden 21, 22 sind durch Metallstäbe 45, insbesondere massive Kupferstäbe, hergestellt. Die (Platin-) Heizdrahtspule 13 ist an den Metallkontaktstücken 19 mit Metallschrauben 24 befestigt. Die Heizdrahtspule 13 definiert eine Heizstrecke in axialer Richtung des Modulfläschchens 14. Die Heizdrahtspule 13 wird entlang dieser Heizstrecke durch ein Quarzrohr 25 abgestützt, das zudem die axiale Länge der Heizstrecke festlegen kann. Das Quarzrohr 25 bildet insoweit auch eine Abschirmung, um die von der Heizdrahtspule 13 erzeugte Temperatur auf die Heizstrecke zu bündeln.

Der untere Teil 15 weist ferner eine kleine Feder 26 auf, durch die das Probengefäß 1 nach oben geschoben wird, wenn es eingesetzt ist. Dies sperrt das Probengefäß 1 mit seinem offenen Ende, der Fläschchenöffnung 6, gegen das Septum 3, das in der Kappe 17 eingelegt ist.

Der Modulfläschchenkörper 16 besteht vorzugsweise aus einem eloxierten (ungefähr 100 µm Oxidschicht) Aluminium und weist bodenseitig ein Innengewinde 27 auf, in das ein Außengewinde 28 des Isolationsbasisteils 18 einschraubbar ist. Das Isolationsbasisteil 18 verschließt so lösbar den Modulfläschchenkörper 16 bodenseitig. Der Modulfläschchenkörper 16 besteht vorzugsweise aus einem Metall oder einer Metalllegierung.

Das Probengefäß 1 besteht vorzugsweise aus Quarz, um Pyrolysetemperaturen bis zu 1400°C standzuhalten. Das vorzugsweise röhrchenförmige Probengefäß 1 weist als ein Einsatzfläschchen einen oberen Abschnitt auf, der breiter ist als ein unterer Abschnitt, der die Gefäßverengung bzw. den Schaft 5 bildet. Das Probengefäß 1 besitzt somit vorzugsweise eine Verjüngung benachbart zum geschlossenen unteren Ende des Probengefäßes 1. Die zu untersuchende Probe wird in diesen unteren Abschnitt gegeben. Die Probe bildet auch hier vorzugsweise eine Seele aus Untersuchungsmaterial in dem Schaft 5 als Kavität.

Das Probengefäß 1 wird derart in den Modulfläschchenkörper 16 eingesetzt, dass der mit der Probe gefüllte Schaft 5 von der Heizdrahtspule 13 ummantelt wird. Entlang des Schaftes 5, der die Probe mit beispielsweise einer Füllstandssäule oder als ein- oder mehrstückigen Gegenstand aufnimmt, wird die Heizstrecke angelegt. Folglich ist es nur der untere Abschnitt des Probengefäßes 1, der hohen Temperaturen, insbesondere hohen Pyrolysetemperaturen, ausgesetzt wird.

Der Modulfläschchenkörper 16 wird mit der Kappe 17 verschlossen, die vorzugsweise eine Schraubkappe 29 ist und das Septum 3 trägt. Der Modulfläschchenkörper 16 weist dazu kopfseitig ein Außengewinde 30 auf. Das Septum 3 ermöglicht die Einführung einer Nadel einer Entnahmevorrichtung (nicht dargestellt), die ihrerseits ein Pyrolyse- oder Reaktionsgas und/oder eine Pyrolyse- oder Reaktionsflüssigkeit in das Probengefäß 1 einspritzen kann. Das Septum 3 ist vorzugsweise mit einer Polymerbeschichtung, z.B. PTFE, verkleidet, die relativ hohen Temperaturen (bis zu beispielsweise 300°C) standhält.

Das Probengefäß 1 und das Modulfläschchen 14 können durch eine gemeinsame, mit einem Septum 3 versehene Kappe 17 derart verschließbar sein, dass durch eine Entnahmevorrichtung Proben in einfacher Weise aus dem Probengefäß 1 zur analytischen Untersuchung entnehmbar sind. Vorteilhaft wirkt insoweit die Feder 26, weil das Probengefäß 1 sich an dem unteren Teil 15 abstützt und mit einer Vorspannung gegen das Septum 3 gedrückt wird bei verschlossenem Modulfläschchen 14. Das Probengefäß 1 kann ferner durch einen Flaschenhals des Modulfläschchens 14 im Aufnahmeraum 40 des Modulfläschchens 14 ausrichtbar und/oder positionierbar sein.

Die Abmessungen des Modulfläschchenkörpers 16 sind beispielsweise wie folgt. Der Außendurchmesser beträgt 11,5 mm und die Höhe ohne Schraubkappe 29 beträgt 32 mm. Diese Abmessungen sind gleich jenen von Fläschchen mit 2 ml, die typischerweise bei Chromatographieinstrumenten verwendet werden. Das Schraubengewinde 30 des Modulfläschchenkörpers 16 passt beispielsweise zu kommerziell erhältlichen Schraubkappen, so dass diese in Kombination mit dem Modulfläschchenkörper 16 verwendet werden können.

Die Abmessungen eines Probenfaches 31 des einsetzbaren Probengefäßes 1 in Form der Gefäßverengung 5 können beispielsweise wie folgt gewählt werden. Der Innendurchmesser beträgt 1,9 mm und die Länge (Höhe) beträgt 12,5 mm. Das Volumen ist ungefähr 25 µl. Die Abmessungen eines Kopfraumfaches 32 oberhalb des Probenfaches 31 (vgl. Fig. 3) sind beispielsweise wie folgt. Der Innendurchmesser beträgt 5 mm und die Länge (Höhe) beträgt 12,5 mm. Das Innenvolumen beträgt vorzugsweise 10 bis 250 µl. Das Kopfraumfach 32 kann insbesondere als Lösungsmittelfach, insbesondere nach der thermischen Behandlung der Probe, verwendet werden. Die inneren Abmessungen ermöglichen, eine Nadel leicht einzuführen und etwa 50 bis 150 µl Lösungsmittel einzuspritzen.

Bevorzugte Abmessungen für das Probenfach 31 liegen bei Höhen von weniger als 60 bis 70 % einer Gesamthöhe des Probengefäßes 1. Das Probengefäß 1, das vorzugsweise zylinderförmig ausgebildet ist, besitzt vorzugsweise einen Durchmesser von 4 bis 40 mm, insbesondere 4 bis 10 mm, im Kopfraumfach 32 und vorzugsweise einen Durchmesser von 1 bis 20 mm, insbesondere 1 bis 5 mm, im Probenfach 31.

Das in den Fig. 3 und Fig. 4 dargestellte und vorstehend beschriebene Modulfläschchen 14 ist ein Vial mit eingebauter bzw. integrierter Heizvorrichtung 11 und mit einem einsetzbaren Inneneinsatz in Form eines Probengefäßes 1, dessen befüllte Kavität im Probenfach 31 durch die Heizvorrichtung 11 beheizbar werden kann. Die thermische Behandlung einer Probe ist dadurch dezentral und wird abgekoppelt vom chromatographischen Analysegerät durchgeführt.

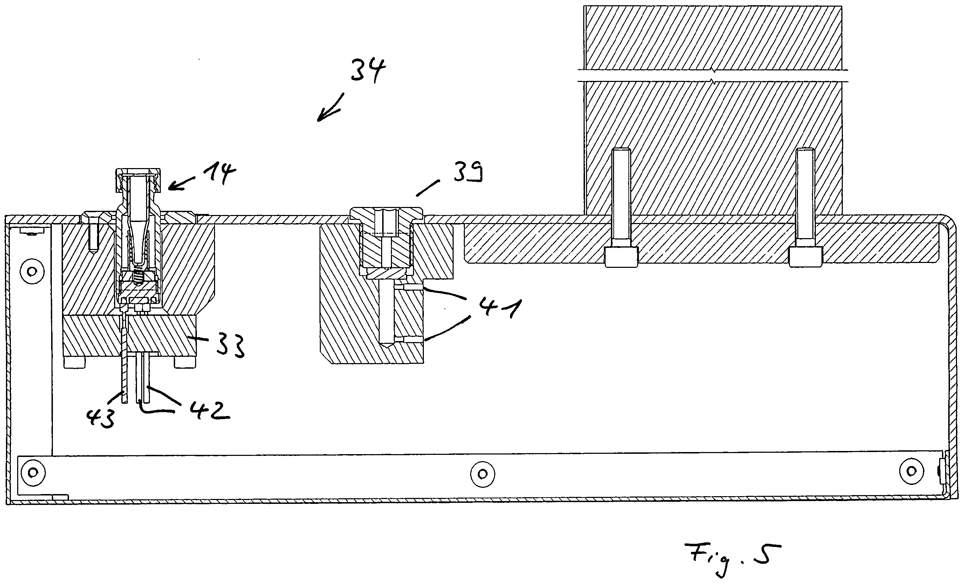

Die Heizvorrichtung 11 kann über eine externe Stromversorgung betätigt werden. Vorzugsweise wird das Modulfläschchen 14 dazu auf einen separaten Aufheizsockel 33 gesetzt. Mit einfacher Anschlusstechnik, wie z.B. federbelasteten Kontakten, Stecktechnik oder plug-in- Technik, kann eine Verbindung zu den Elektroden 21, 22 des unteren Teils 15 des Modulfläschchens 14 geschaffen werden. Die Elektroden 21, 22 bilden folglich Anschlusselemente für eine externe Stromversorgung und sind dazu vorzugsweise außenseitig in das Isolationsbauteil 18 eingelegt. Der Aufheizsockel 33 kann an einer Modulfläschchenstation 34 (vgl. Fig. 5) montiert sein.

Gemäß der Erfindung basiert die Leistungsversorgung der Heizdrahtspule 13 bei den Ausführungsbeispielen gemäß Fig. 1A, 1B, 2A, 2B, 3 und 4 auf einer Konstantstromsteuerung. Diese Konstantstromsteuerung wird durch Impulsbreitenmodulation (PWM) proportional gesteuert, d.h. ein höherer PWM-Wert ergibt einen höheren Strom. Überdies ist die Temperatur der Heizdrahtspule 13 zum elektrischen Strom proportional. Durch die Programmierung eines maximalen PWM-Wertes ist der Heizanstieg als Funktion der Zeit steuerbar. Die Impulsbreitenmodulation optimiert die Reproduzierbarkeit der Temperaturbehandlung der Probe im Probengefäß 1.

Das Prinzip der Widerstandsheizdrahterwärmung wird hierdurch genutzt, ohne dass aufgrund der Unvollkommenheit einer exakten Montage der Heizdrahtspule 13 ein unterschiedlicher elektrischer Widerstand erhalten wird. Dies ist insoweit bedeutsam, weil sich der Gesamtwiderstand über der ganzen elektrischen Schaltung auf den elektrischen Strom für eine gegebene Spannung auswirken kann.

Die Temperatur wird vorzugsweise durch drei Parameter gesteuert: eine Vorheizzeit, eine Verzögerungszeit und eine Heiz-PWM. Die Vorheizzeit ist die Zeit, während der ein maximaler Strom an die Heizdrahtspule 13 angelegt wird. Die nach dem Vorheizen erhaltene Temperatur hängt von ihrer Dauer ab. Während der Verzögerungszeit findet kein Anlegen von Strom statt. Diese Verzögerung verringert die Temperaturüberschreitung insbesondere bei relativ niedrigen Temperaturen. Der Heiz-PWM-Wert ist ein Maß für den Strom während der Heizperiode.

Das anfängliche Erhitzen durch die Heizdrahtspule 13 kann relativ langsam beginnen mit beispielsweise 20 bis 50°C/s und bis auf 250°C/s zunehmen. Folglich sind nur 2 bis 3 s erforderlich, um eine Pyrolysetemperatur von beispielsweise 500°C zu erreichen. Die Heizzeit auf der Pyrolysetemperatur liegt vorzugsweise bei 10 bis 30 s.

Für ein Eindampfen einer beispielsweise flüssigen Probe in dem Probengefäß 1 vor einer Pyrolyse wird eine Verdampfertemperatur mittels der Heizdrahtspule 13 eingestellt, die beispielsweise bei 150 bis 250°C liegt. Eindampfen und Pyrolyse können in demselben Probengefäß 1 durchgeführt werden.

Die Heizdrahtspule 13 ist vorzugsweise eine Platinheizdrahtspule.

Das Probengefäß 1 ist als ein Einsatz für ein (Außen-)Vial ausgebildet, das in einen Aufnahmeraum 40 eines mit einer Kappe 17 verschließbaren Modulfläschchens 14 als ein (Innen-)Vial eingesetzt werden kann. Gebildet werden somit ein Außenvial mit einem Innenvial, die vorzugsweise über einen gemeinsamen Injektionsverschluss verfügen.

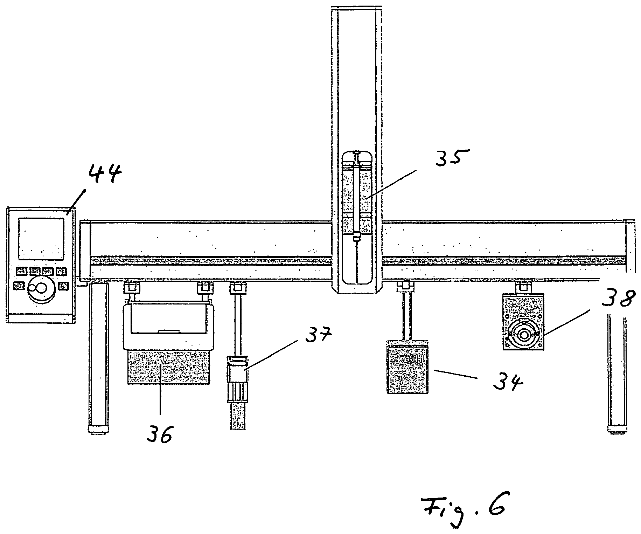

Wie Fig. 6 zeigt, kann die Modulfläschchenstation 34 an einem kommerziell erhältlichen, mit einer Steuereinheit 44 ausgebildeten XYZ-Roboter montiert werden. Das Modulfläschchen 14 kann durch eine Z-Einheit 35 von einem Fläschchenhaltergestell 36 in die Modulfläschchenstation 34 transportiert werden. Nach der Pyrolyse kann Lösungsmittel mit einer Spritze in der Z-Einheit 35 aus einem Lösungsmittelbehälter 37 angesaugt und in das Modulfläschchen 14 eingespritzt werden. Danach kann zur besseren Durchmischung das Modulfläschchen gegebenenfalls geschüttelt werden. Schließlich kann der Extrakt beispielsweise in eine Schleife eingespritzt werden, die an einem Einspritzventil 38 für eine Einspritzung in ein Flüssigkeitschromatographiesystem installiert ist. Das Modulfläschchen 14 kann so als Schnittstelle in einen Roboter für die Probenvorbereitung und Probenaufgabe in der chromatographischen Trenntechnik integriert werden.

Fig. 5 zeigt eine Modulfläschchenstation 34 mit dem Aufheizsockel 33 und einer Durchflusszelle 39, die beispielsweise mit einem Inertgas gespült wird. Dieses Gas kann mit einer gasdichten Spritze angesaugt und in das Probengefäß 1 eingelassen werden.

Die Erfindung ermöglicht es, eine Probe in einem Fläschchen vorzubereiten, und dieser Prozess kann vollständig automatisiert werden. Die Anwendung von verschiedenen Probengefäßen 1 führt erfindungsgemäß nicht zu verschiedenen Pyrolysebedingungen und folglich nicht zu unreproduzierbaren Pyrogrammen.

Das Modulfläschchen 14 kann für eine sequentielle Pyrolyse angewendet werden.

## Patentansprüche

1. Vorrichtung zur Durchführung einer Probenvorbereitung für ein Analysegerät, insbesondere einen Chromatographen, mit einem durch eine selbstdichtende Abdeckung verschließbaren Probengefäß (1), das ein Probenfach (31) zur Aufnahme einer Untersuchungssubstanz aufweist, mit einer eine Heizdrahtspule (13) aufweisenden Halterung (12), in die das Probengefäß (1) mit seinem Probenfach (31) zum Erhitzen der Untersuchungssubstanz einsetzbar ist, wobei als Halterung (12) ein mit einer Verschlusskappe (17) verschließbares Modulfläschchen (14) vorgesehen ist, in dessen Innenraum (40) das Probengefäß (1) als ein Einsatzfläschchen eingesetzt ist, mit einer Leistungsversorgung für die Heizdrahtspule (13), **dadurch gekennzeichnet, dass** die Leistungsversorgung auf einer Konstantstromsteuerung basiert, die durch Impulsbreitenmodulation proportional gesteuert ist, und dass die Heizdrahtspule (13) im unteren Teil des Modulfläschchens (14) integriert ist, wobei die Heizdrahtspule (13) an Metallringelektroden (21, 22) angeschlossen ist, die bodenseitig des Modulfläschchens (14) angeordnet sind.

2. Vorrichtung nach Anspruch 1, **dadurch gekennzeichnet, dass** die Leistungsversorgung der Heizdrahtspule (13) extern über einen anschließbaren Aufheizsockel (33) vorgesehen ist.

3. Vorrichtung nach einem der Ansprüche 1 oder 2, **dadurch gekennzeichnet, dass** die Heizdrahtspule (13) eine Platinheizdrahtspule ist.

## Claims

1. A device for carrying out sample preparation for an analysis apparatus, in particular a chromatograph, comprising a sample vessel (1) which can be closed by a self-sealing cover and comprises a sample compartment (31) for receiving a substance to be examined, and comprising a holder (12) which comprises a heating wire coil (13) and into which the sample vessel (1) with its sample compartment (31) can be inserted in order to heat the substance to be examined, wherein the holder (12) provided is a module container (14) which can be closed with a closure cap (17) and in the interior (40) of which the sample vessel (1) is inserted as an insertable container, comprising a power supply for the heating wire coil (13), **characterized in that** the power supply is based on a constant current control which is controlled proportionally by pulse width modulation, and **in that** the heating wire coil (13) is integrated into the lower part of the module container (14), wherein the heating wire coil (13) is connected to metal ring electrodes (21, 22) which are arranged on the bottom of the module container (14).

2. The device as claimed in claim 1, **characterized in that** the power supply of the heating wire coil (13) is provided externally via a connectable heating base (33).

3. The device as claimed in one of claims 1 or 2, **characterized in that** the heating wire coil (13) is a platinum heating wire coil.

## Revendications

1. Appareil pour préparer un échantillon pour un analyseur, en particulier un chromatographe, avec un récipient pour échantillon (1) pouvant être fermé par un recouvrement auto-étanche, qui présente un compartiment pour échantillon (31) pour la réception d'une substance à analyser, avec un support (12) présentant une bobine de fil de chauffage (13), dans lequel le récipient pour échantillon (1) avec son compartiment pour échantillon (31) peut être inséré pour le chauffage de la substance à analyser, dans lequel un flacon modulaire (14) pouvant être fermé avec un capuchon de fermeture (17) est prévu en tant que support (12), dans l'espace intérieur (40) duquel le récipient pour échantillon (1) est inséré en tant que flacon d'insertion, avec une alimentation de puissance pour la bobine de fil de chauffage (13), **caractérisé en ce que** l'alimentation de puissance se base sur une commande à courant constant, qui est commandée proportionnellement par modulation en largeur d'impulsion et que la bobine de fil de chauffage (13) est intégrée dans la partie inférieure du flacon modulaire (14), dans lequel la bobine de fil de chauffage (13) est raccordée à des électrodes annulaires métalliques (21, 22), qui sont agencées côté fond du flacon modulaire (14).

2. Dispositif selon la revendication 1, **caractérisé en ce que** l'alimentation en puissance de la bobine de fil de chauffage (13) est prévue en externe par le biais d'un socle de chauffage raccordable (33).

3. Dispositif selon l'une quelconque des revendications 1 ou 2, **caractérisé en ce que** la bobine de fil de chauffage (13) est une bobine de fil de chauffage en platine.
